# EUROPEAN PATENT SPECIFICATION

(11) **EP 4 397 959 B1**
(45) Date of publication and mention of the grant of the patent: **09.09.2026**
(21) Application number: 24150464.6
(22) Date of filing: 05.01.2024
(51) Int. Cl.: G01N 21/25, G01N 21/27, G01N 35/00, G01N 35/02, G01N 21/78

(54) **ANALYSIS DEVICE**
ANALYSEGERÄT
DISPOSITIF D'ANALYSE

(30) Priority: 05.01.2023 JP 2023000520
(43) Date of publication of application: 10.07.2024
(73) Proprietor: Furuno Electric Company Limited, Hyogo 662-8580 (JP)
(72) Inventor: NAKASHIMA, Atsuo, Nishinomiya, Hyogo (JP); NISHIKAWA, Takafumi, Amagasaki, Hyogo (JP)
(74) Representative: Müller Hoffmann & Partner

(56) References cited:
- US-A- 4 313 735
- US-A- 4 549 809
- US-A- 4 690 900
- US-B2- 8 765 475

## Description

### BACKGROUND

### Technical Field

The invention relates to an analysis device.

### Description of Conventional Art

Conventionally, there is known an analysis device that analyzes components in a sample by reacting the sample and a reagent in a reaction container called a cuvette (see, for example, Patent Literature 1). In this type of analysis device, the components in the sample are measured from the difference between the absorbance of a reaction liquid measured by irradiating the reaction liquid with light and the absorbance of a blank liquid measured by irradiating the blank liquid such as water with light. Specifically, the analysis device measures the absorbances at multiple measurement positions for each of the reaction liquids and the blank liquids, and calculates the difference between the absorbance corresponding to each of the measurement positions of the reaction liquid and the blank liquid. Analysis devices having a photometric unit and that continuously measure absorbances of sample-filled cuvettes which move relative to the photometric unit are further known from US 4 549 809 A and US 4 690 900 A.

In addition, the analysis device rotates a cuvette table on which multiple cuvettes are disposed in an annular shape, each of the cuvette passes through a light source, and the absorbance is measured. Therefore, for example, the measurement position may shift due to the uneven rotation of a motor that rotates the cuvette table, the torsion of a rotating shaft, and the acceleration and deceleration of rotation. In response to such an issue, the analysis device performs correlation processing to correct the measurement position and eliminate the misalignment in each of the measurement results of the reaction liquid and the blank liquid.

### Conventional Art

### Patent Literature

[Patent Literature 1] Japanese Patent Application Laid-open No. H09-80055

### SUMMARY

### Technical Problem

However, in the conventional technique, there is room for further improvement in improving the accuracy of correction of the measurement position by correlation processing.

Therefore, the invention provides an analysis device capable of improving the accuracy of correction of the measurement position by correlation processing, as defined in independent claim 1.

### Solution to the Problem

The above problem is solved by the subject-matter of independent claim 1.

In order to address the above issue, the analysis device according to the disclosure includes a photometric unit, an acquisition unit, and a correction unit. The photometric unit is configured to measure absorbances at multiple measurement positions from one end to the other end in the width direction of a cuvette which is open at one end in the height direction. The acquisition unit is configured to acquire blank data measured by the photometric unit in a state where a blank liquid is placed in the cuvette, and sample data measured by the photometric unit in a state where a reaction liquid in which a sample and a reagent are reacted is placed in the cuvette. The correction unit is configured to perform correction to align measurement positions of the blank data and the sample data based on correlation processing of each of the measurement positions of the blank data and the sample data.

As a result, the analysis device may improve the accuracy of correction of the measurement position by correlation processing.

In addition, the analysis device according to the disclosure further includes a driving unit. The driving unit is configured to rotate the cuvettes disposed in an annular shape in an annular direction. The photometric unit is configured to measure the absorbances while the cuvettes are rotated in the annular direction. The correction unit is configured to subject a specific cuvette among the cuvettes to the correlation processing.

As a result, the analysis device may improve the accuracy of correction of the measurement position by correlation processing.

Also, the specific cuvette according to the disclosure is the cuvette in which the absorbance is measured during a period of time when the angular velocity is changing.

As a result, the analysis device may improve the accuracy of correction of the measurement position by correlation processing.

Also, the specific cuvette according to the disclosure is the cuvette in which the absorbance is measured during a period of time when the angular velocity is constant.

As a result, the analysis device may improve the accuracy of correction of the measurement position by correlation processing.

Further, the driving unit according to the disclosure is configured to repeat a sequence from a stationary state in which the cuvettes are stationary, through a rotating state in which the cuvettes are rotated in the annular direction, and to the stationary state. The acquisition unit is configured to acquire the blank data measured by the photometric unit in the sequence that is specific. The correction unit is configured to perform the correlation processing by using the blank data in the sequence that is specific.

As a result, the analysis device may improve the accuracy of correction of the measurement position by correlation processing.

Further, the acquisition unit according to the disclosure is configured to acquire first blank data measured by the photometric unit in a first sequence and second blank data measured by the photometric unit in a second sequence. The correction unit is configured to calculate a correction value for aligning measurement positions of the first blank data and the second blank data based on correlation processing of each of the measurement positions of the first blank data and the second blank data, and correct each of measurement values of the sample data by the correction value.

As a result, the analysis device may improve the accuracy of correction of the measurement position by correlation processing.

Further, the acquisition unit according to the disclosure is configured to acquire multiple blank data measured with each of the cuvettes and multiple sample data measured with each of the cuvettes. The correction unit is configured to perform the correlation processing by using the blank data and the sample data.

As a result, the analysis device may improve the accuracy of correction of the measurement position by correlation processing.

Also, the analysis device according to the disclosure includes a substrate, a light receiving element, and multiple amplifier circuits. The light receiving element is provided on the substrate and configured to receive light of each of wavelengths that has passed through the cuvette. The amplifier circuits are provided on the substrate and configured to amplify a signal of the light of each of wavelengths received by the light receiving element for each of the wavelengths. The connection distance between each of the amplifier circuits and the light receiving element is shorter in the amplifier circuit configured to amplify a signal with a wavelength less than a particular value than in the amplifier circuit configured to amplify a signal with a wavelength greater than or equal to the particular value.

In this way, the analysis device may reduce electrical noise.

Further, the connection distance according to the disclosure is the shortest in the amplifier circuit configured to amplify a signal with a wavelength of 340 nm.

In this way, the analysis device may reduce electrical noise.

### BRIEF DESCRIPTION OF THE DRAWINGS

FIG. 1 is a plan view showing a schematic configuration of an analysis device according to an embodiment.
FIG. 2 is a diagram illustrating an example of correlation processing performed by an analysis device.
FIG. 3 is a functional block diagram showing a configuration example of the analysis device according to the embodiment.
FIG. 4 is a diagram showing intermittent rotation of the cuvette table.
FIG. 5 is a diagram showing intermittent rotation of the cuvette table.
FIG. 6 is a diagram showing a substrate structure on which the light receiving element is disposed in the photometric unit.
FIG. 7 is a diagram showing the power supply of the photometric unit.
FIG. 8 is a flow chart showing the procedure of processing executed by the analysis device according to the embodiment.

### DETAILED DESCRIPTION

Embodiments of the disclosure will be described in detail below with reference to the drawings. In addition, in each of the following embodiments, the same parts are denoted by the same reference numerals, and repeated descriptions will be omitted.

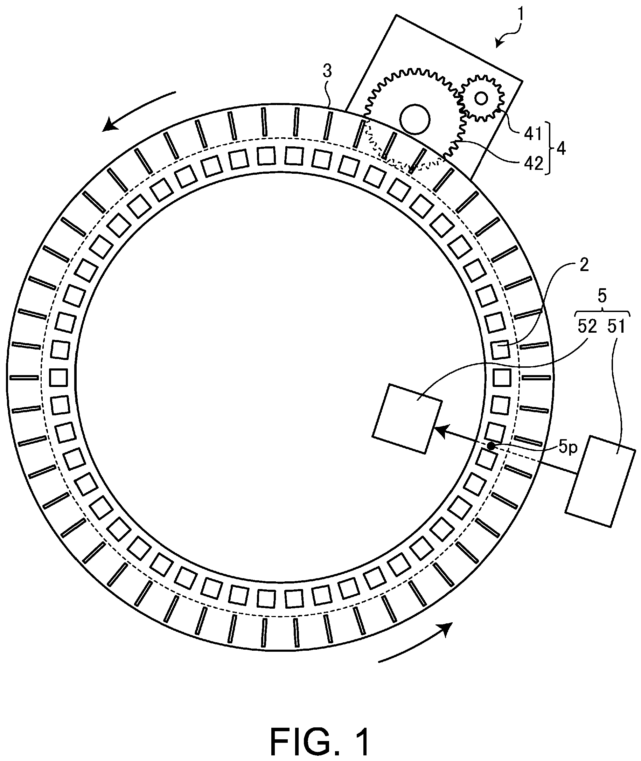

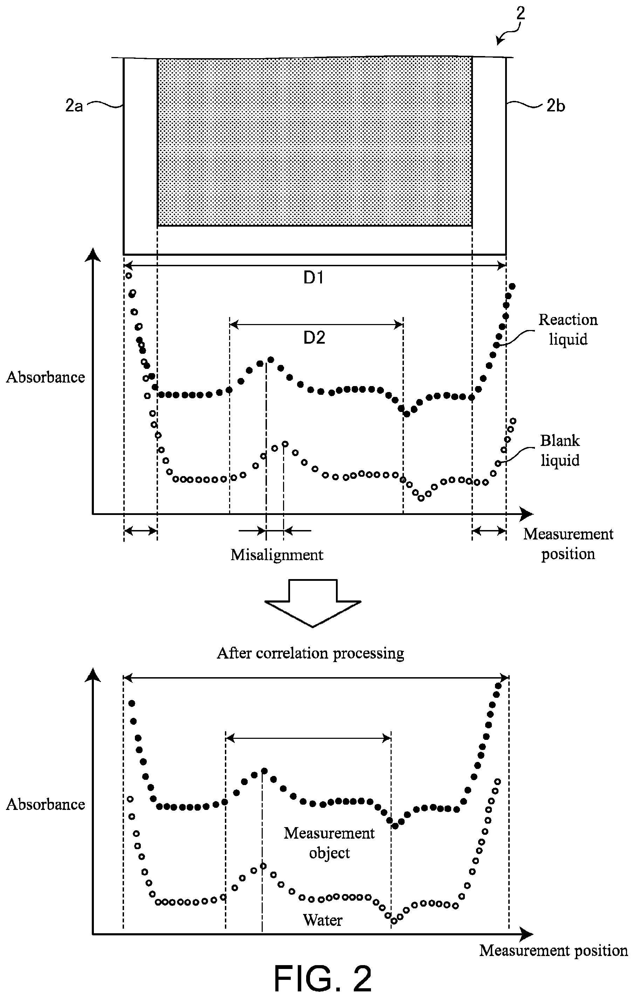

FIG. 1 is a plan view showing a schematic configuration of an analysis device 1 according to an embodiment. FIG. 2 is a diagram illustrating an example of correlation processing performed by an analysis device. In addition, the analysis device 1 described below will be described with an example in which the same sample is reacted with two types of reagents to analyze the components in the sample. It should be noted that the number of reagents to be reacted with the sample is not limited to two, and may be one or three or more. Moreover, the sample is, for example, human blood, and the components to be analyzed include, for example, alanine aminotransferase (ALT) in the blood.

As shown in FIG. 1, the analysis device 1 includes multiple cuvettes 2, a cuvette table 3, a driving unit 4, and a photometric unit 5. In addition, the analysis device 1 further has a sample storage that stores samples to be dispensed into the cuvette 2, a reagent storage that stores reagents to be dispensed into the cuvette 2, and an arm that dispenses the samples and the reagents from the sample storage and the reagent storage into the cuvette 2, but the illustration is omitted in FIG. 1 for the sake of convenience.

The cuvette 2 is a reaction vessel in which a sample and a reagent are reacted, and is made of, for example, a transparent material (a resin material, a glass material, or the like). The cuvette 2 is, for example, in the shape of a cuboid (a cube or other shapes may be used), and has an opening for dispensing of the sample and the reagent at one end in the height direction (the depth direction of the paper surface).

The cuvette table 3 is formed in an annular shape in a plan view, and rows of the cuvettes 2 are disposed along the annular direction.

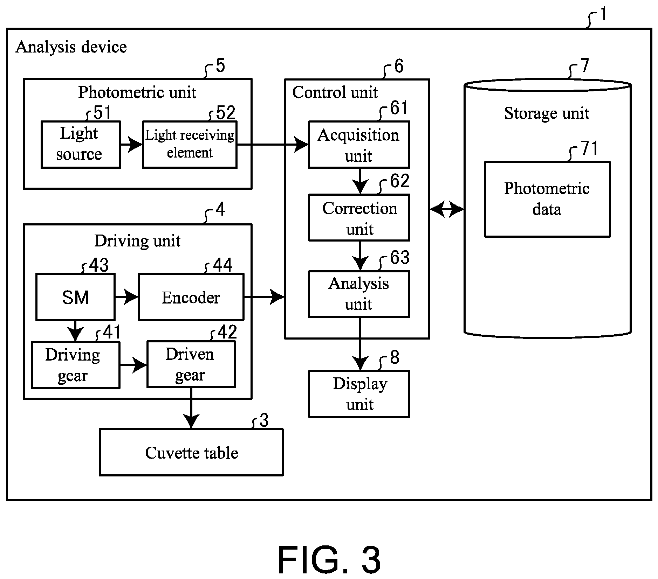

The driving unit 4 drives the cuvette table 3 to rotate. Specifically, the driving unit 4 includes a driving gear 41, a driven gear 42, a stepping motor (SM) 43, and an encoder 44 (see FIG. 3). The driving gear 41 is connected to the driven gear 42 and the stepping motor 43. The driven gear 42 is connected to the driving gear 41 and the cuvette table 3.

The photometric unit 5 includes a light source 51 provided on the outer peripheral side of the cuvette table 3 and a light receiving element 52 provided on the inner peripheral side of the cuvette table 3. The light source 51 is composed of, for example, a halogen lamp and emits light toward the light receiving element 52. The light receiving element 52 is, for example, a photodiode and receives light emitted from the light source 51.

The analysis device 1 having such a configuration operates as follows.

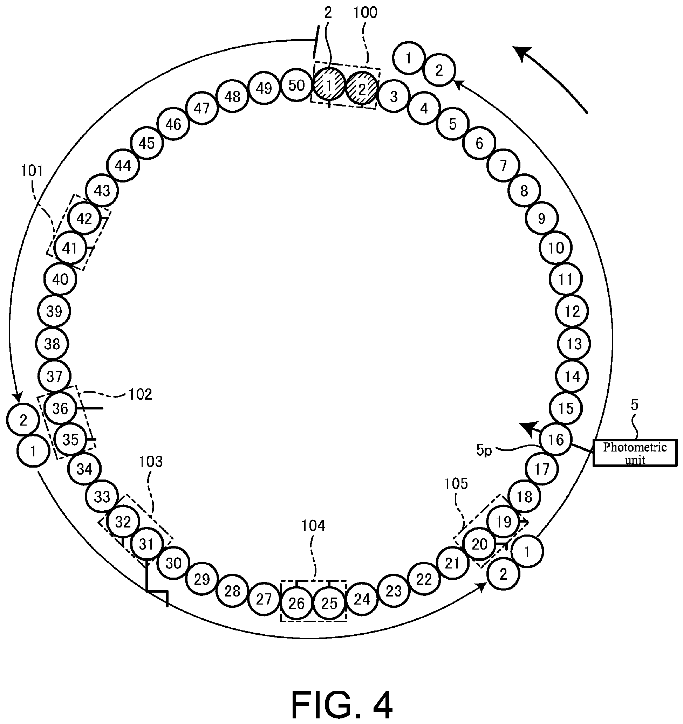

Specifically, first the driving unit 4 drives the stepping motor 43 to rotate the driving gear 41, and the rotational force of the driving gear 41 is transmitted to the driven gear 42 to rotate the driven gear 42. As a result, the rotational force of the driven gear 42 is transmitted to the cuvette table 3 to rotate the cuvette table 3. Moreover, the driving unit 4 intermittently rotates the cuvette table 3 alternately between a stationary state and a rotating state. Details of the intermittent rotation will be described later with reference to FIG. 4.

Then, the photometric unit 5 irradiates the reaction liquid in the cuvette 2 passing through a photometric position 5p with light while the cuvette table 3 is rotating, and the absorbance of the reaction liquid is measured by measuring the light passing through each of the cuvettes 2 at multiple measurement positions.

In addition, the analysis device 1 measures the absorbance of a blank liquid such as water (pure water) that is dispensed into a cuvette and photometrically measured. Then, the analysis device 1 calculates the difference between the measured absorbance of the reaction liquid and the measured absorbance of the blank liquid as the final absorbance of the reaction liquid.

Here, the difference described above is calculated for each of the measurement positions. Specifically, the difference described above is calculated by using the closest measurement positions of the reaction liquid and the blank liquid. Therefore, for example, the measurement position may shift due to the uneven rotation of the stepping motor 43, the torsion of the rotating shaft, and the acceleration and deceleration of the rotation. As a result, the measurement positions of the reaction liquid and the blank liquid are misaligned, and there is a possibility that the absorbance may not be measured accurately. In response to such an issue, the analysis device 1 performs correlation processing to correct the measurement position and eliminate the misalignment in each of the measurement results of the reaction liquid and the blank liquid.

In the disclosure, the correlation processing is performed by using multiple measurement positions from one end to the other end in the width direction of the cuvette 2 (the rotational direction of the cuvette table 3). This point will be described with reference to FIG. 2.

FIG. 2 shows a cross-sectional view of the cuvette 2 (a cross-section viewed from the photometric unit 5) and a diagram of the absorbances measured at multiple measurement positions from one end 2a to the other end 2b of the cuvette 2. It should be noted that each point in the graph of FIG. 2 indicates each of the measurement positions.

As shown in FIG. 2, the photometric unit 5 measures the absorbances including the one end 2a and/or the other end 2b, which are the housing portion of the cuvette 2. Then, as shown in FIG. 2, the absorbances of the one end 2a and/or the other end 2b, which are the housing portion of the cuvette 2, are higher than the absorbance of the internal space of the cuvette 2 (the space filled with the reaction liquid).

Therefore, in the disclosure, correlation processing is performed by using the absorbances of both the one end 2a and the other end 2b, which are the housing portion of the cuvette 2, for example. For example, the analysis device 1 compares graph shapes of the absorbances at the measurement positions (the measurement positions included in a first range D1) from the one end 2a to the other end 2b, which is the housing portion of the cuvette 2, and the data of the blank liquid (or the reaction liquid) is shifted until the graph shapes of the absorbances of the blank liquid and the reaction liquid are aligned.

As a result, as shown in the lower diagram of FIG. 2, the measurement positions of the blank liquid and the reaction liquid are aligned with respect to the graph shapes after the correlation processing. In this way, the accuracy of the absorbance of the reaction liquid calculated from the difference between the reaction liquid and the blank liquid may be improved.

In other words, in the disclosure, correlation processing is performed by using positions with high absorbances of the one end 2a and the other end 2b, which are the housing portion of the cuvette 2. Since the sensitivity of correlation processing may be increased, the accuracy of correction of the measurement position by the correlation processing may be improved.

Then, the analysis device 1 calculates the final absorbance of the reaction liquid based on the data of the reaction liquid and the blank liquid for which correction of the measurement position has been completed in the correlation processing. Specifically, the analysis device 1 calculates the final absorbance of the reaction liquid by using the absorbances at the measurement positions included in a second range D2 that is smaller than the internal space of the cuvette 2.

Next, a configuration example of the analysis device 1 according to the embodiment will be described with reference to FIG. 3. FIG. 3 is a functional block diagram showing a configuration example of the analysis device 1 according to the embodiment. In addition, in the block diagram of FIG. 3, merely the components critical to the description of the features of the embodiment are represented by functional blocks, and the description of general components is omitted.

In other words, each component illustrated in the block diagram of FIG. 3 is functionally conceptual and does not inevitably have to be physically configured as illustrated. For example, the specific form of distribution and integration of each functional block is not limited to the illustrated one, all or part thereof may be functionally or physically distributed and integrated in arbitrary units according to various loads and usage conditions.

As shown in FIG. 3, the analysis device 1 includes the cuvette table 3, the driving unit 4, a photometric unit 5, a control unit 6, a storage unit 7, and a display unit 8. The control unit 6 includes an acquisition unit 61, a correction unit 62, and an analysis unit 63. The storage unit 7 stores photometric data 71.

Here, the analysis device 1 includes, for example, a computer and various circuits that have a Central Processing Unit (CPU), a Read Only Memory (ROM), a Random Access Memory (RAM), a hard disk drive, input and output ports, and the like.

For example, the CPU of the computer functions as the acquisition unit 61, the correction unit 62, and the analysis unit 63 of the control unit 6 by reading and executing a program stored in the ROM.

In addition, at least a portion or all of the acquisition unit 61, the correction unit 62, and the analysis unit 63 of the control unit 6 may also be configured by hardware such as an Application Specific Integrated Circuit (ASIC) or a Field Programmable Gate Array (FPGA).

Also, the storage unit 7 is a storage unit configured by a storage device such as a semiconductor element memory or a hard disk drive, for example. The storage unit 7 stores the photometric data 71, various programs, and various information critical to the processing of the control unit 6.

Next, each function of the control unit 6 (the acquisition unit 61, the correction unit 62, and the analysis unit 63) will be described in detail.

The acquisition unit 61 acquires various types of information. Specifically, the acquisition unit 61 acquires absorbance data measured by the photometric unit 5. More specifically, the acquisition unit 61 acquires blank data measured by the photometric unit 5 in a state where a blank liquid is placed in the cuvette 2 and sample data measured by the photometric unit 5 in a state where a reaction liquid in which a sample and a reagent are reacted is placed in the cuvette 2. The acquisition unit 61 stores the acquired blank data and sample data as the photometric data 71 in the storage unit 7.

The correction unit 62 performs correction to align the measurement positions of the blank data and the sample data based on correlation processing of each of the measurement positions of the blank data and the sample data acquired by the acquisition unit 61.

The analysis unit 63 performs various analyzes based on the blank data and the sample data corrected by the correction unit 62. Specifically, the analysis unit 63 calculates the final calculated value of the sample data by calculating the difference between the blank data and the sample data. Then, the analysis unit 63 measures the components contained in the sample based on the calculated value of the sample data. The analysis unit 63 then displays the analysis result on the display unit 8.

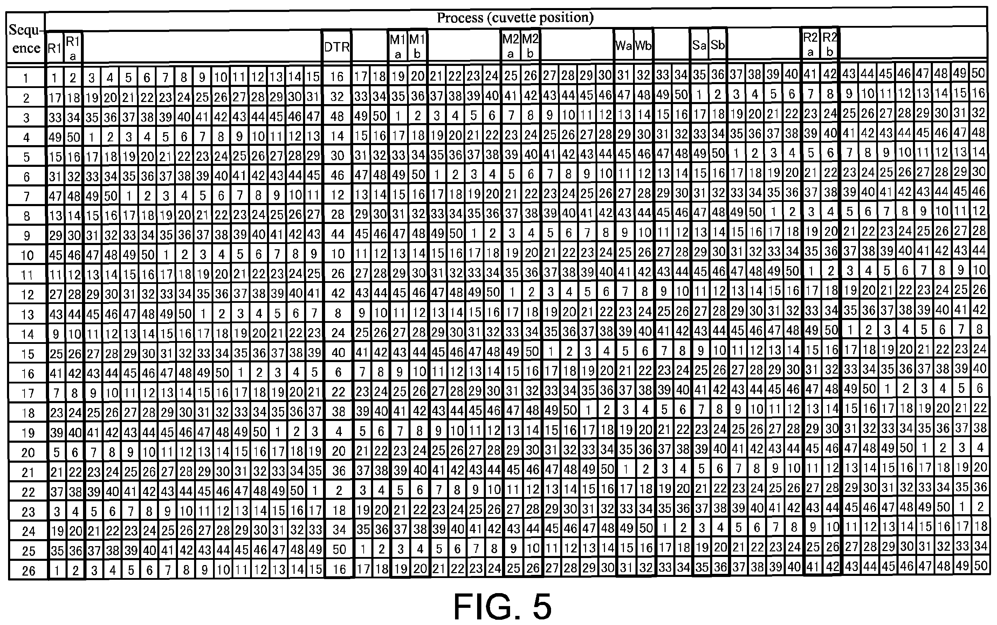

It should be noted that the correction unit 62 performs correlation processing on a specific cuvette 2 among the cuvettes 2 disposed on the cuvette table 3. Specifically, the correction unit 62 subjects the cuvette 2 of which angular velocity satisfies a particular condition when passing the photometric position 5p to the correlation processing. This point will be described with reference to FIGS. 4 and 5.

FIGS. 4 and 5 are diagrams showing intermittent rotation of the cuvette table 3. FIGS. 4 and 5 show an example in which 50 cuvettes 2 are disposed on the cuvette table 3.

Intermittent rotation is to be described here. Intermittent rotation means an operation of repeating a sequence from a stationary state in which the cuvettes 2 are stationary, through a rotating state in which the cuvettes 2 rotate in an annular direction, and to the stationary state when the cuvette table 3 is rotated by the driving unit 4. In the example shown in FIG. 4, if focus is placed on the first and second cuvettes 2 in the initial positions, when one sequence is performed, the first and second cuvettes 2 are moved to the 35th and 36th cuvettes 2 in the initial positions by rotation. That is, the rotation is about one-third. Subsequently, when the next sequence is performed, the first and second cuvettes 2 are moved to the 19th and 20th cuvettes 2 in the initial positions. Also, when the next sequence is performed, the first and second cuvettes 2 are moved to the third and fourth cuvettes 2 in the initial positions. In other words, in the intermittent rotation, the displacement in the annular direction is carried out by two cuvettes during one rotation.

In addition, the analysis device 1 performs particular processing on the cuvette 2 at each of processing positions 100 to 105 in each sequence. Specifically, at the processing position 100, a first reagent (R1) is dispensed. At the processing position 101, a second reagent (R2) is dispensed. At the processing position 102, sample dispensing is performed. At the processing positions 104 and 105, the reaction liquid is stirred.

FIG. 5 shows a sequence example until the first and second cuvettes 2 returning to the initial positions again. As shown in FIG. 5, the first and second cuvettes 2 return to the initial positions again by performing 1 to 26 sequences, in other words, all cuvettes 2 may be processed by the processing positions 100 to 105 to make absorbance measurements.

Here, the correction unit 62 subjects a specific cuvette 2 to correlation processing. For example, the correction unit 62 subjects the cuvette 2 of which absorbance is measured while the angular velocity of the cuvette table 3 is changing.

Specifically, in the initial position (1 sequence) shown in FIG. 5, the 16th cuvette 2 corresponds to the photometric position 5p. The period during which the angular velocity changes is divided into an acceleration period and a deceleration period. In the initial position, the cuvette 2 during the acceleration period is the 17th cuvette 2, and the cuvette 2 during the deceleration period is the 15th cuvette 2. This is because there is a high possibility that the measurement position will shift during the period in which the angular velocity changes. Therefore, the correction unit 62 may correct the misalignment of the measurement position due to the acceleration and deceleration by subjecting the cuvette 2 in the period when the angular velocity changes to the correlation processing.

Further, the correction unit 62 may subject the cuvette 2 of which absorbance is measured during a period in which the angular velocity is constant to the correlation processing. In this way, for example, the misalignment of the measurement position that occurs constantly, such as the misalignment of the rotating shaft, may be corrected.

Further, the correction unit 62 may perform correlation processing by using blank data photometrically measured by the photometric unit 5 in a specific sequence, for example. In this way, the process of acquiring blank data in a number of sequences more than crucial may be omitted, and the processing load of blank data acquisition on the analysis device 1 may be reduced.

Further, the acquisition unit 61 measures first blank data measured by the photometric unit 5 in the first sequence and second blank data measured by the photometric unit in the second sequence, for example. Then, the correction unit 62 may calculate a correction value (shift amount) for aligning each of the measurement positions of the first blank data and the second blank data based on the correlation processing of each of the measurement positions of the first blank data and the second blank data, and correct each of measurement values of the sample data by the correction value. As a result, correlation processing between the blank liquid and the reaction liquid for each of the cuvettes 2 may not have to be performed, so the processing load associated with the correlation processing may be reduced.

Further, the correction unit 62 is not limited to performing correlation processing by using single blank data and single sample data, and may perform correlation processing by using multiple blank data and multiple sample data.

For example, the correction unit 62 may calculate a correction value (shift amount) for each set of multiple blank data and multiple sample data, and correct the measurement position of the sample data by statistical values (an average value, a mode value, a median value, etc.) of each of the correction values.

A method for reducing optical noise (misalignment of the measurement position of the photometric unit 5) in the analysis device 1 has been described above. A method for reducing electrical noise (equipment noise) in the analysis device 1 will be described below.

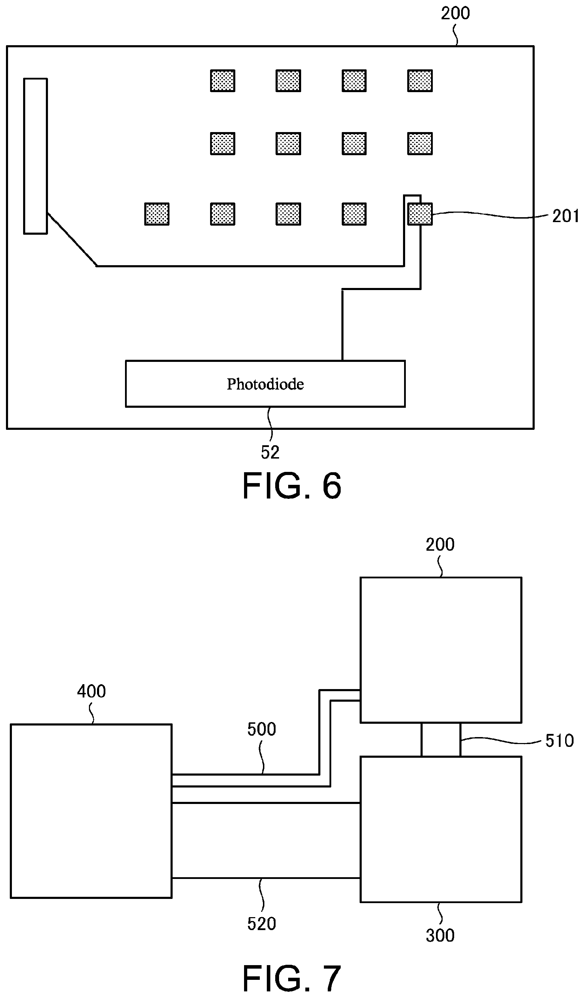

FIG. 6 is a diagram showing a substrate structure on which the light receiving element 52 (the photodiode) is disposed in the photometric unit 5. Since 340 nm, which has a small amount of light, is used for the absorbance of ALT described above, the amount of transmitted light is also small, and the amount of change in absorbance is small. For this reason, the amplification factor of the amplifier for the ALT signal has to be increased, for example, if the connection distance from the photodiode 52 to an amplifier circuit 201 is long, noise increases according to the distance.

Therefore, in the disclosure, the connection distance between the photodiode 52 and the amplifier circuit 201 is minimized. Specifically, a substrate 200 includes multiple amplifier circuits 201 that amplify the signal of light of each of wavelengths received by the light receiving element 52 for each of the wavelengths. It should be noted that FIG. 6 shows merely a connection example of the amplifier circuit 201 that amplifies the shortest wavelength of 340 nm among the amplifier circuits 201.

As shown in FIG. 6, the connection distance between the amplifier circuits 201 and the light receiving element 52 is such that the amplifier circuit 201 that amplifies a signal with a wavelength of 340 nm is the shortest. Specifically, among the amplifier circuits 201, the amplifier circuit 201 that amplifies a signal with the wavelength of 340 nm is disposed to be closest to the light receiving element 52. In other words, the amplifier circuit 201 that amplifies a signal with a wavelength less than a particular value is made shorter than the amplifier circuit 201 that amplifies a signal with a wavelength equal to or greater than the particular value. As a result, electrical noise that is superimposed according to the connection distance may be suppressed.

Next, FIG. 7 is a diagram showing the power supply of the photometric unit 5. FIG. 7 shows the first substrate 200, a second substrate 300, and a third substrate 400 of the photometric unit 5. The first substrate 200 is a substrate on which the light receiving element 52 and the amplifier circuits 201 are disposed, as shown in FIG. 6. The second substrate 300 is a substrate that amplifies and AD converts the signal input from the first substrate 200. The third substrate 400 is a substrate that calculates the absorbance based on the signal input from the second substrate 300.

In the example shown in FIG. 7, the third substrate 400 and the first substrate 200 are connected by a first discrete wire 500. Also, the first substrate 200 and the second substrate 300 are connected by a stacking connector 510. Moreover, the second substrate 300 and the third substrate 400 are connected by a second discrete wire 520.

In such a configuration, the third substrate 400 supplies a first voltage, which is a particular power supply voltage, to the first substrate 200. The first substrate 200 steps down the first voltage to a second voltage lower than the first voltage to operate various circuits. Also, the first substrate 200 supplies the second substrate 300 with the power supply voltage stepped down to the second voltage. The second substrate 300 further steps down the second voltage to a third voltage lower than the second voltage to operate various circuits. In this way, in the disclosure, the first substrate 200 and the second substrate 300 function as regulators that step down the requisite voltage by themselves, thereby reducing electric noise compared to the case where the power supply voltage is supplied from the third substrate 400.

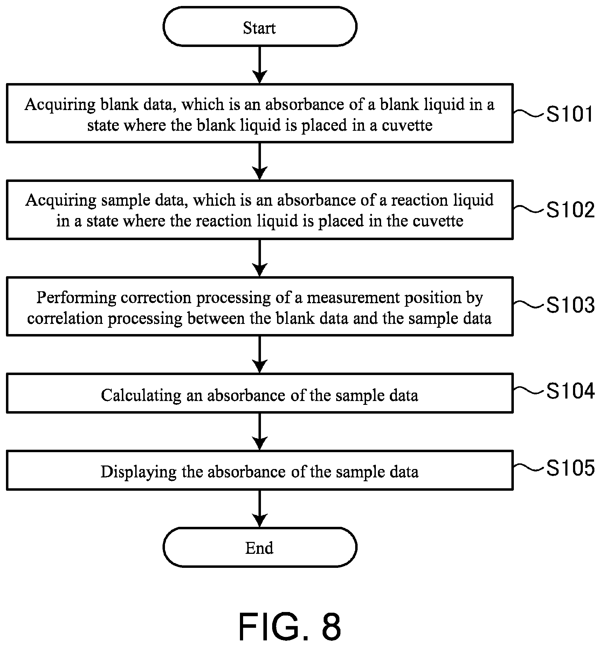

Next, a procedure of processing executed by the analysis device 1 according to the embodiment will be described with reference to FIG. 8. FIG. 8 is a flow chart showing the procedure of processing executed by the analysis device 1 according to the embodiment.

As shown in FIG. 8, first the control unit 6 acquires blank data, which is the absorbance of the blank liquid in a state where the blank liquid is dispensed into the cuvette 2 (step S101).

Subsequently, the control unit 6 acquires sample data, which is the absorbance of the reaction liquid in a state where the reaction liquid is dispensed into the cuvette 2 (step S102).

Next, the control unit 6 performs correction processing of the measurement position by correlation processing between the blank data and the sample data (step S103).

Subsequently, the control unit 6 calculates the final absorbance of the sample data by calculating the difference between the corrected sample data and the blank data (step S104).

Afterwards, the control unit 6 displays the calculated absorbance of the sample data on the display unit 8 (step S105), and ends the process.

As described above, according to an embodiment of the disclosure, the analysis device 1 includes the photometric unit 5, the acquisition unit 61, and the correction unit 62. The photometric unit 5 measures absorbances at multiple measurement positions from one end to the other end in the width direction of the cuvette 2 which is open at one end in the height direction. The acquisition unit 61 acquires blank data measured by the photometric unit 5 in a state where a blank liquid is placed in the cuvette 2, and sample data measured by the photometric unit 5 in a state where a reaction liquid in which a sample and a reagent are reacted is placed in the cuvette 2. The correction unit 62 performs correction to align the measurement positions of the blank data and the sample data based on the correlation processing of the measurement positions of the blank data and the sample data. As a result, the analysis device 1 may improve the accuracy of correction of the measurement position by correlation processing.

Further, among the processes described in the above embodiments, all or part of the processes described as being performed automatically may be performed manually. Alternatively, all or part of the processes described as being performed manually may be performed automatically by known methods. In addition, information including processing procedures, specific names, various data and parameters shown in the above documents and drawings may be arbitrarily changed unless otherwise specified. For example, the various information shown in each drawing is not limited to the illustrated information.

Also, each component of each device illustrated is functionally conceptual, and does not inevitably have to be physically configured as illustrated. That is, the specific form of distribution and integration of each device is not limited to the illustrated one, all or part thereof may be functionally or physically distributed and integrated in arbitrary units according to various loads and usage conditions.

Moreover, the disclosure is not limited to the above embodiments, and various modifications may be made within the scope of the claims. For example, the technical scope of the disclosure also includes forms obtained by appropriately combining the above-described embodiments in areas where the processing contents are not inconsistent. Also, the order of the steps shown in the flow chart and sequence diagrams of the above embodiments may be changed as appropriate.

### Description of Reference Numerals

1: analysis device
2: cuvette
2a: one end
2b: the other end
3: cuvette table
4: driving unit
5: photometric unit
5p: photometric position
6: control unit
7: storage unit
8: display unit
41: driving gear
42: driven gear
43: stepping motor
44: encoder
51: light source
52: light receiving element
61: acquisition unit
62: correction unit
63: analysis unit
71: photometric data
200: substrate
201: amplifier circuit
300: second substrate
400: third substrate
500: first discrete wire
510: stacking connector
520: second discrete wire

## Claims

1. An analysis device (1), comprising:
a photometric unit (5), configured to measure absorbances at a plurality of measurement positions from one end (2a) to the other end (2b) in a width direction of a cuvette (2) that is open at one end in a height direction;
an acquisition unit (61), configured to acquire blank data measured by the photometric unit (5) in a state where a blank liquid is placed in the cuvette (2), and sample data measured by the photometric unit (5) in a state where a reaction liquid in which a sample and a reagent are reacted is placed in the cuvette (2); and
a correction unit (62), configured to perform correction to align absorbances as defined by the blank data and obtained at a plurality of measurement positions, wherein these absorbances together provide a blank data graph shape, and the absorbances as defined by the sample data and obtained at a plurality of measurement positions which absorbances together provide a sample data graph shape, based on correlation processing of each of the plurality of measurement positions of the blank data and the sample data, the correlation processing including comparing the blank data graph shape and the sample data graph shape .

2. The analysis device according to claim 1, further comprising:
a driving unit (4), configured to rotate a cuvette table with a plurality of the cuvettes (2) disposed in an annular shape, the rotation in an annular direction, wherein
the photometric unit (5) is configured to measure the absorbances while the plurality of the cuvettes (2) are rotated in the annular direction, and
the correction unit (62) is configured to subject a specific cuvette (2) among the plurality of the cuvettes (2) to the correlation processing.

3. The analysis device according to claim 2, wherein
the specific cuvette (2) is the cuvette (2) in which the absorbance is measured during a period of time when angular velocity is changing.

4. The analysis device according to claim 2, wherein
the specific cuvette (2) is the cuvette (2) in which the absorbance is measured during a period of time when angular velocity is constant.

5. The analysis device according to claim 2, wherein
the driving unit (4) is configured to repeat a sequence from a stationary state in which the plurality of the cuvettes (2) are stationary, through a rotating state in which the plurality of the cuvettes (2) are rotated in the annular direction, and to the stationary state,
the acquisition unit (61) is configured to acquire the blank data measured by the photometric unit (5) in the sequence that is specific, and
the correction unit (62) is configured to perform the correlation processing by using the blank data in the sequence that is specific.

6. The analysis device according to claim 5, wherein
the acquisition unit (61) is configured to acquire first blank data measured by the photometric unit (5) in a first sequence and second blank data measured by the photometric unit (5) in a second sequence different from the first sequence, and
the correction unit (62) is configured to calculate a correction value for aligning a plurality of measurement positions of the first blank data and the second blank data based on correlation processing of each of the plurality of measurement positions of the first blank data and the second blank data, and correct each of measurement values of the sample data by the correction value.

7. The analysis device according to claim 1, wherein
the acquisition unit (61) is configured to acquire a plurality of the blank data measured with each of a plurality of the cuvettes (2) and a plurality of the sample data measured with each of the plurality of the cuvettes (2), and
the correction unit (62) is configured to perform the correlation processing by using the plurality of the blank data and the plurality of the sample data.

8. The analysis device according to claim 1, further comprising:
a substrate (200);
a light receiving element (52), provided on the substrate (200) and configured to receive light of each of wavelengths that has passed through the cuvette (2); and
a plurality of amplifier circuits (201), provided on the substrate (200) and configured to amplify a signal of the light of each of wavelengths received by the light receiving element (52) for each of the wavelengths,
wherein a connection distance between each of the plurality of amplifier circuits (201) and the light receiving element (52) is shorter in the amplifier circuit (201) configured to amplify a signal with a wavelength less than a particular value than in the amplifier circuit (201) configured to amplify a signal with a wavelength greater than or equal to the particular value.

9. The analysis device according to claim 8, wherein
the connection distance is the shortest in the amplifier circuit (201) configured to amplify a signal with a wavelength of 340 nm.

## Patentansprüche

1. Analysevorrichtung (1), aufweisend:
eine photometrische Einheit (5), die konfiguriert ist, um Absorptionen an einer Vielzahl von Messpositionen von einem Ende (2a) zu dem anderen Ende (2b) in einer Breitenrichtung einer Küvette (2) zu messen, die an einem Ende in einer Höhenrichtung offen ist;
eine Erfassungseinheit (61), die konfiguriert ist, um Leerwertdaten, die durch die photometrische Einheit (5) in einem Zustand gemessen werden, in dem eine Leerwertflüssigkeit in der Küvette (2) platziert ist, und Probendaten, die durch die photometrische Einheit (5) in einem Zustand gemessen werden, in dem eine Reaktionsflüssigkeit, in der eine Probe und ein Reagens umgesetzt werden, in der Küvette (2) platziert sind, zu erfassen; und
eine Korrektureinheit (62), die konfiguriert ist, um eine Korrektur durchzuführen, um Absorptionen, wie durch die Leerwertdaten definiert und an einer Vielzahl von Messpositionen erhalten, wobei diese Absorptionen zusammen eine Leerwertdatengraphform liefern, und die Absorptionen, wie durch die Probendaten definiert und an einer Vielzahl von Messpositionen erhalten, wobei die Absorptionen zusammen eine Probendatengraphform liefern, basierend auf einer Korrelationsverarbeitung von jeder der Vielzahl von Messpositionen der Leerwertdaten und der Probendaten auszurichten, wobei die Korrelationsverarbeitung ein Vergleichen der Leerwertdatengraphform und der Probendatengraphform umfasst.

2. Analysevorrichtung nach Anspruch 1, ferner aufweisend:
eine Antriebseinheit (4), die konfiguriert ist, um einen Küvettentisch mit einer Vielzahl der Küvetten (2), die in einer Ringform angeordnet sind, zu drehen, wobei die Drehung in einer Ringrichtung erfolgt, wobei
die photometrische Einheit (5) konfiguriert ist, um die Absorptionen zu messen, während die Vielzahl der Küvetten (2) in der Ringrichtung gedreht wird, und
die Korrektureinheit (62) konfiguriert ist, um eine spezifische Küvette (2) unter der Vielzahl der Küvetten (2) der Korrelationsverarbeitung zu unterziehen.

3. Analysevorrichtung nach Anspruch 2, wobei
die spezifische Küvette (2) die Küvette (2) ist, in der die Absorption während eines Zeitraums gemessen wird, in dem sich die Winkelgeschwindigkeit ändert.

4. Analysevorrichtung nach Anspruch 2, wobei
die spezifische Küvette (2) die Küvette (2) ist, in der die Absorption während eines Zeitraums gemessen wird, in dem die Winkelgeschwindigkeit konstant ist.

5. Analysevorrichtung nach Anspruch 2, wobei
die Antriebseinheit (4) konfiguriert ist, um eine Sequenz von einem stationären Zustand, in dem die Vielzahl der Küvetten (2) stationär sind, über einen Drehzustand, in dem die Vielzahl der Küvetten (2) in der Ringrichtung gedreht werden, und zu dem stationären Zustand zu wiederholen,
die Erfassungseinheit (61) konfiguriert ist, um die Leerwertdaten zu erfassen, die durch die photometrische Einheit (5) in der Sequenz gemessen werden, die spezifisch ist, und
die Korrektureinheit (62) konfiguriert ist, um die Korrelationsverarbeitung unter Verwendung der Leerwertdaten in der Sequenz, die spezifisch ist, durchzuführen.

6. Analysevorrichtung nach Anspruch 5, wobei
die Erfassungseinheit (61) konfiguriert ist, um erste Leerwertdaten, die durch die photometrische Einheit (5) in einer ersten Sequenz gemessen werden, und zweite Leerwertdaten, die durch die photometrische Einheit (5) in einer zweiten Sequenz gemessen werden, die sich von der ersten Sequenz unterscheidet, zu erfassen, und
die Korrektureinheit (62) konfiguriert ist, um einen Korrekturwert zum Ausrichten einer Vielzahl von Messpositionen der ersten Leerwertdaten und der zweiten Leerwertdaten basierend auf einer Korrelationsverarbeitung von jeder der Vielzahl von Messpositionen der ersten Leerwertdaten und der zweiten Leerwertdaten zu berechnen und jeden der Messwerte der Probendaten durch den Korrekturwert zu korrigieren.

7. Analysevorrichtung nach Anspruch 1, wobei
die Erfassungseinheit (61) konfiguriert ist, um eine Vielzahl der Leerwertdaten, die mit jeder einer Vielzahl der Küvetten (2) gemessen werden, und eine Vielzahl der Probendaten, die mit jeder der Vielzahl der Küvetten (2) gemessen werden, zu erfassen, und
die Korrektureinheit (62) konfiguriert ist, um die Korrelationsverarbeitung unter Verwendung der Vielzahl der Leerwertdaten und der Vielzahl der Probendaten durchzuführen.

8. Analysevorrichtung nach Anspruch 1, ferner aufweisend:
ein Substrat (200);
ein Lichtempfangselement (52), das auf dem Substrat (200) vorgesehen und konfiguriert ist, um Licht jeder der Wellenlängen zu empfangen, das die Küvette (2) durchlaufen hat; und
eine Vielzahl von Verstärkerschaltungen (201), die auf dem Substrat (200) vorgesehen und konfiguriert sind, um ein Signal des Lichts jeder der Wellenlängen zu verstärken, das von dem Lichtempfangselement (52) für jede der Wellenlängen empfangen wird,
wobei ein Verbindungsabstand zwischen jeder der Vielzahl von Verstärkerschaltungen (201) und dem Lichtempfangselement (52) in der Verstärkerschaltung (201), die konfiguriert ist, um ein Signal mit einer Wellenlänge zu verstärken, die kleiner als ein bestimmter Wert ist, kürzer ist als in der Verstärkerschaltung (201), die konfiguriert ist, um ein Signal mit einer Wellenlänge zu verstärken, die größer oder gleich dem bestimmten Wert ist.

9. Analysevorrichtung nach Anspruch 8, wobei
der Verbindungsabstand in der Verstärkerschaltung (201), die konfiguriert ist, um ein Signal mit einer Wellenlänge von 340 nm zu verstärken, der kürzeste ist.

## Revendications

1. Dispositif d'analyse (1), comprenant :
une unité photométrique (5), configurée pour mesurer des absorbances à une pluralité de positions de mesure d'une extrémité (2a) à l'autre extrémité (2b) dans une direction de largeur d'une cuvette (2) qui est ouverte à une extrémité dans une direction de hauteur ;
une unité d'acquisition (61), configurée pour acquérir des données vierges mesurées par l'unité photométrique (5) dans un état où un liquide vierge est placé dans la cuvette (2), et des données d'échantillon mesurées par l'unité photométrique (5) dans un état où un liquide de réaction dans lequel un échantillon et un réactif réagissent est placé dans la cuvette (2) ; et
une unité de correction (62), configurée pour réaliser une correction pour aligner les absorbances telles que définies par les données vierges et obtenues à une pluralité de positions de mesure, dans lequel ces absorbances fournissent ensemble une forme de graphique de données vierges, et les absorbances telles que définies par les données d'échantillon et obtenues à une pluralité de positions de mesure fournissent ensemble une forme de graphique de données d'échantillon, sur la base d'un traitement de corrélation de chacune de la pluralité de positions de mesure des données vierges et des données d'échantillon, le traitement de corrélation incluant la comparaison de la forme de graphique de données vierges et de la forme de graphique de données d'échantillon.

2. Dispositif d'analyse selon la revendication 1, comprenant en outre :
une unité d'entraînement (4), configurée pour faire tourner une table de cuvettes avec une pluralité de cuvettes (2) disposées selon une forme annulaire, la rotation étant dans une direction annulaire, dans lequel
l'unité photométrique (5) est configurée pour mesurer les absorbances pendant que la pluralité de cuvettes (2) sont en rotation dans la direction annulaire, et
l'unité de correction (62) est configurée pour soumettre une cuvette (2) spécifique parmi la pluralité de cuvettes (2) au traitement de corrélation.

3. Dispositif d'analyse selon la revendication 2, dans lequel
la cuvette (2) spécifique est la cuvette (2) dans laquelle l'absorbance est mesurée pendant une période de temps au cours de laquelle la vitesse angulaire change.

4. Dispositif d'analyse selon la revendication 2, dans lequel
la cuvette (2) spécifique est la cuvette (2) dans laquelle l'absorbance est mesurée pendant une période de temps au cours de laquelle la vitesse angulaire est constante.

5. Dispositif d'analyse selon la revendication 2, dans lequel
l'unité d'entraînement (4) est configurée pour répéter une séquence partant d'un état stationnaire dans lequel la pluralité de cuvettes (2) sont stationnaires, passant par un état rotatif dans lequel la pluralité de cuvettes (2) sont mises en rotation dans la direction annulaire, et allant jusqu'à l'état stationnaire,
l'unité d'acquisition (61) est configurée pour acquérir les données vierges mesurées par l'unité photométrique (5) dans la séquence qui est spécifique, et
l'unité de correction (62) est configurée pour réaliser le traitement de corrélation à l'aide des données vierges dans la séquence qui est spécifique.

6. Dispositif d'analyse selon la revendication 5, dans lequel
l'unité d'acquisition (61) est configurée pour acquérir des premières données vierges mesurées par l'unité photométrique (5) dans une première séquence et des secondes données vierges mesurées par l'unité photométrique (5) dans une seconde séquence différente de la première séquence, et
l'unité de correction (62) est configurée pour calculer une valeur de correction pour aligner une pluralité de positions de mesure des premières données vierges et des secondes données vierges sur la base d'un traitement de corrélation de chacune de la pluralité de positions de mesure des premières données vierges et des secondes données vierges, et corriger chacune des valeurs de mesure des données d'échantillon par la valeur de correction.

7. Dispositif d'analyse selon la revendication 1, dans lequel
l'unité d'acquisition (61) est configurée pour acquérir une pluralité des données vierges mesurées avec chacune d'une pluralité de cuvettes (2) et une pluralité de données d'échantillon mesurées avec chacune de la pluralité de cuvettes (2), et
l'unité de correction (62) est configurée pour réaliser le traitement de corrélation à l'aide de la pluralité de données vierges et de la pluralité de données d'échantillon.

8. Dispositif d'analyse selon la revendication 1, comprenant en outre :
un substrat (200) ;
un élément de réception de lumière (52), prévu sur le substrat (200) et configuré pour recevoir de la lumière de chacune parmi des longueurs d'onde ayant traversé la cuvette (2) ; et
une pluralité de circuits amplificateurs (201), prévus sur le substrat (200) et configurés pour amplifier un signal de la lumière de chacune parmi des longueurs d'onde reçues par l'élément de réception de lumière (52) pour chacune des longueurs d'onde,
dans lequel une distance de connexion entre chacun de la pluralité de circuits amplificateurs (201) et l'élément de réception de lumière (52) est plus courte dans le circuit amplificateur (201) configuré pour amplifier un signal d'une longueur d'onde inférieure à une valeur particulière que dans le circuit amplificateur (201) configuré pour amplifier un signal d'une longueur d'onde supérieure ou égale à la valeur particulière.

9. Dispositif d'analyse selon la revendication 8, dans lequel
la distance de connexion est la plus courte dans le circuit amplificateur (201) configuré pour amplifier un signal d'une longueur d'onde de 340 nm.
